# EUROPEAN PATENT APPLICATION

(11) **EP 2 980 731 A1**
(43) Date of publication of application: **03.02.2016**
(21) Application number: 14775719.9
(22) Date of filing: 20.03.2014
(51) Int. Cl.: G06Q 10/00

(54) **GENERATING METHOD, VERIFYING METHOD FOR ELECTRONIC BILL WITH ANTI-FAKE TWO DIMENSION (2D) CODE AND SYSTEM FOR SAME**

(30) Priority: 26.03.2013 CN 201310098910
(71) Applicant: China Unionpay Co., Ltd, Shanghai 200135 (CN)
(72) Inventor: CHAI, Hongfeng, Shanghai 200135 (CN); LU, Zhijun, Shanghai 200135 (CN); YIN, Yawei, Shanghai 200135 (CN); FEI, Zhijun, Shanghai 200135 (CN)
(74) Representative: Schweiger, Johannes
(86) International application number: PCT/CN2014/073747
(87) International publication number: WO 2014/154109

(57) **Abstract**

The present invention relates to methods for generating and verifying an electronic bill with an anti-counterfeiting two-dimensional code and systems of the same. The method of generating an electronic bill with an anti-counterfeiting two-dimensional code of the present invention comprises reading an original electronic bill picture and generating a temporary electronic bill picture with a determined region for embedding two-dimensional code; calculating digest data for the temporary electronic bill picture by using an information digest algorithm and encrypting the obtained digest data to generate an anti-counterfeiting two-dimensional code; and embedding the anti-counterfeiting two-dimensional code into said region of the original electronic bill picture to obtain an electronic bill with the anti-counterfeiting two-dimensional code. Using the present invention can effectively avoid the electronic bill being tampered and forged, and also can greatly enhancing style diversification and practicability of the electronic bill.

## Description

### TECHNICAL FIELD

The present invention relates to an information security technology, more specifically to a data processing technology for processing image data of a two-dimensional code.

### BACKGROUND

An electronic bill, also known as an electronic commercial bill, is gradually developed with the economic development, which uses functions of the paper bill regarding payment, usage, settlement, financing and so on for reference, transfers money from one account to another account using the digital network, and achieves the transmission and storage of funds using electronic pulses instead of paper. It is based on computers and current communication networks, stores funds information into the computer system in the form of a data message, and achieves the functions of traditional paper bills through the electronic information transfer way which is non-visible and non-available via the Internet. The so-called "data message" is the information which is generated, sent, received or stored by electronic methods, optical methods, or the like, including but not limited to electronic data exchange (EDI), e-mail, telegram, telex or facsimile, etc..

The electronic bill is the information generated, stored or transferred between the computer and the computer through electronic and optical means, is usually recorded in the computer or disk carrier, becomes the written word or is displayed on the screen after technical processing, and cannot be recognized with the naked eye. Functions of the electronic bill have the same as or even superior to that of the traditional paper bill in terms of some aspects, such as aggregation, payment, circulation, financing, settlement, and credit, however, the electronic bill also exist certain risk to be tampered and counterfeited. In order to improve the security of the electronic bill, there are the following two kinds of anti-counterfeiting technology of the electronic bill in the existing art.

The first anti-counterfeiting technology is that a certain pattern is embedded in the picture of the electronic bill. However, this method of embedding the certain pattern in the picture has such a problem: the content of the embedded pattern is not related to the content of the protected picture, and the embedding pattern is easy to be forged.

The second anti-counterfeiting technology is that an anti-counterfeiting digital watermarking is embedded in the picture. However, this method of embedding the anti-counterfeiting digital watermarking in the picture may be limited by the format and the content of the picture, and the embedding capacity of the digital watermarking is not high.

### SUMMARY

In view of the above problems, the present invention aims to provide methods for generating and verifying an electronic bill with an anti-counterfeiting two-dimensional code and a system of the same to effectively avoid being tampered and forged and improve the embedding capacity and recognition rate of the anti-counterfeiting data.

A method for generating an electronic bill with an anti-counterfeiting two-dimensional code according to the present invention, comprising: temporarily generating the electronic bill wherein an original electronic bill picture is read and a temporary electronic bill picture with a determined region for embedding the two-dimensional code is generated; generating an anti-counterfeiting two-dimensional code wherein digest data for the temporary electronic bill picture is calculated by using an information digest algorithm and the obtained digest data is encrypted to generate an anti-counterfeiting two-dimensional code; and embedding an anti-counterfeiting two-dimensional code wherein the anti-counterfeiting two-dimensional code is embedded into the region for embedding two-dimensional code of the original electronic bill picture to obtain an electronic bill with the anti-counterfeiting two-dimensional code.

Preferably, the temporarily generating the electronic bill includes reading the original electronic bill picture; determining the region for embedding the two-dimensional code in the original electronic bill picture; and setting the pixel value for the region for embedding the two-dimensional code to a specified value and generating the temporary electronic bill picture.

Preferably, a fast detecting and positioning algorithm of the two-dimensional code region based on edge enhancement may be used to determine the region for embedding the two-dimensional code in the original electronic bill picture.

Preferably, the fast detecting and positioning algorithm of the two-dimensional code region based on edge enhancement includes the following steps: inputting image; performing an initialization; performing a Max-Min differential operation; performing a Candy edge extraction; performing an initial positioning of the projection; performing a precise positioning of the morphology; and outputting results.

Preferably, the generating anti-counterfeiting two-dimensional code includes:
calculating digest data of the temporary electronic bill picture by using an information digest algorithm;
performing a data signature on the generated digest data by using a private key, and thereby generating encrypted digest data; and
generating the anti-counterfeiting two-dimensional code from the encrypted digest data.

Preferably, the information digest algorithm is either of the MD5 algorithm and the SHA-1 algorithm.

Preferably, the specified value is 0.

A method for verifying an electronic bill with an anti-counterfeiting two-dimensional code according to the present invention includes: temporarily generating the electronic bill wherein an electronic bill picture with the anti-counterfeiting two-dimensional code is read, the anti-counterfeiting two-dimensional code is positioned and extracted, and a temporary electronic bill picture with a positioned region for embedding two-dimensional code is generated; obtaining temporary digest data wherein digest data of the temporary electronic bill picture is calculated by using an information digest algorithm to obtain the temporary digest data; obtaining original digest data wherein the extracted anti-counterfeiting two-dimensional code is decoded and decrypted to obtain the original digest data; and comparing the digest data wherein the temporary digest data and the original digest data are compared with each other, then it is determined as a legal bill in the case where the two data are consistent and it is determined as an illegal bill in the case where the two data are not consistent.

Preferably, the temporarily generating the electronic bill includes:reading the electronic bill with the anti-counterfeiting two-dimensional code; positioning and extracting the anti-counterfeiting two-dimensional code; determining the region for embedding two-dimensional code from the result of the positioning; and setting the pixel value for the region for embedding the two-dimensional code to a specified value and generating a temporary electronic bill file.

Preferably, a fast detecting and positioning algorithm of the two-dimensional code region based on edge enhancement is used to determine the region for embedding the two-dimensional code in the electronic bill picture with the anti-counterfeiting two-dimensional code.

Preferably, the fast detecting and positioning algorithm of the two-dimensional code region based on edge enhancement includes the following steps: inputting image; performing an initialization; performing a Max-Min differential operation; performing a Candy edge extraction; performing an initial positioning of the projection; performing a precise positioning of the morphology; and outputting results.

Preferably, the obtaining original digest data includes: decoding the anti-counterfeiting two-dimensional code to obtain encrypted digest data; and decrypting the encrypted digest data by using a public key to obtain original digest data.

Preferably, the information digest algorithm is either of the MD5 algorithm and the SHA-1 algorithm.

Preferably, the specified value is 0.

A system for generating an electronic bill with an anti-counterfeiting two-dimensional code of the present invention comprise: a bill generating terminal, an electronic bill service platform and a bill certificating mechanism, wherein the bill certificating mechanism is used for providing a private key and a public key; the electronic bill service platform is used for calculating digest data for the temporary electronic bill picture by using an information digest algorithm and encrypting the obtained digest data by using the private key provided by the bill certificating mechanism to generate the anti-counterfeiting two-dimensional code; and the bill generating terminal is used for embedding the anti-counterfeiting two-dimensional code into the region for embedding two-dimensional code of the original electronic bill picture to obtain an electronic bill with the anti-counterfeiting two-dimensional code.

Preferably, the bill generating terminal is used for setting the pixel value for the region for embedding the two-dimensional code to a specified value in order to generate the temporary electronic bill picture with the determined region for embedding the two-dimensional code.

Preferably, the bill generating terminal determines the region for embedding the two-dimensional code in the original electronic bill picture by using a fast detecting and positioning algorithm of the two-dimensional code region based on edge enhancement.

Preferably, the electronic bill service platform is used for calculating digest data of the temporary electronic bill picture by using an information digest algorithm, performing a data signature on the generated digest data by using the private key provided by the bill certificating mechanism, thus generating encrypted digest data, and generating the anti-counterfeiting two-dimensional code according to encrypted digest data.

Preferably, the information digest algorithm is either of the MD5 algorithm and the SHA-1 algorithm.

Preferably, the specified value is 0.

A system for verifying an electronic bill with an anti-counterfeiting two-dimensional code of the present invention comprise: a bill generating terminal, an electronic bill service platform and a bill certificating mechanism, wherein the bill certificating mechanism is used for providing a private key and a public key; the bill generating terminal is used for reading an electronic bill picture with the anti-counterfeiting two-dimensional code, positioning and extracting the anti-counterfeiting two-dimensional code, and generating a temporary electronic bill picture with a positioned region for embedding the two-dimensional code; and the electronic bill service platform is used for calculating digest data of the temporary electronic bill picture by using an information digest algorithm to obtain temporary digest data; for decoding and decrypting the extracted anti-counterfeiting two-dimensional code to obtain the original digest data; and for comparing the temporary digest data with the original digest data, and then determining from the comparison that it is a legal bill in the case where the two data are consistent and it is an illegal bill in the case where the two data are not consistent.

Preferably, the bill generating terminal sets the pixel value for the region for embedding the two-dimensional code to a specified value in order to generate the temporary electronic bill picture with a determined region for embedding the two-dimensional code.

Preferably, the bill generating terminal determines the rgion for embedding the two-dimensional code in the electronic bill picture with the anti-counterfeiting two-dimensional code by using a fast detecting and positioning algorithm of the two-dimensional code region based on edge enhancement.

Preferably, the electronic bill service platform is used for decoding the anti-counterfeiting two-dimensional code to obtain encrypted digest data, and decrypting the encrypted digest data by using the public key provided by the bill certificating mechanism to obtain original digest data.

Preferably, the information digest algorithm is either of the MD5 algorithm and the SHA-1 algorithm.

Preferably, the specified value is 0.

A system for generating and verifying an electronic bill with an anti-counterfeiting two-dimensional code of the present invention comprises a bill generating terminal, an electronic bill service platform and a bill certificating mechanism, wherein the bill certificating mechanism being used for providing a private key and a public key, in case of generating the electronic bill with the anti-counterfeiting two-dimensional code: the bill generating terminal is used for reading an original electronic bill picture, and generating a temporary electronic bill picture with a determined region for embedding two-dimensional code; the electronic bill service platform is used for calculating digest data for the temporary electronic bill picture by using an information digest algorithm and encrypting the obtained digest data by using the private key provided by the bill certificating mechanism to generate the anti-counterfeiting two-dimensional code, and the bill generating terminal is used for embedding the anti-counterfeiting two-dimensional code in the region for embedding two-dimensional code of the original electronic bill picture to obtain the electronic bill with the anti-counterfeiting two-dimensional code; and in case of verifying the electronic bill with the anti-counterfeiting two-dimensional code: the bill generating terminal is used for reading an electronic bill picture with the anti-counterfeiting two-dimensional code, positioning and extracting the anti-counterfeiting two-dimensional code, and generating a temporary electronic bill picture with a determind region for embedding two-dimensional code, the electronic bill service platform is used for calculating digest data of the temporary electronic bill picture by using an information digest algorithm to obtain temporary digest data; for decoding and decrypting the extracted anti-counterfeiting two-dimensional code to obtain the original digest data; and for comparing the temporary digest data with the original digest data, and then determining from the comparison it is a legal bill in the case where the two data are consistent and it is an illegal bill in the case where the two data are not consistent..

As mentioned above, an electronic bill anti-counterfeiting solution based on a two-dimensional code technology proposed by the present invention is a technical solution employing technical means, specifically is the technical solution in which the anti-counterfeiting electronic bill is generated and the electronic bill anti-counterfeiting verification is performed by using technologies such as those based on MD5 digest technology, digital signature technology, two-dimensional code technology and two-dimensional code positioning technology. The technical solution of the present invention realizes the embedding and extracting of the anti-counterfeiting data in the electronic bill picture, and improves the embedding capacity and the recognition rate of the anti-counterfeiting data. Moreover, the technical solution of the present invention employs the two-dimensional code technology and the two-dimensional code positioning technology, which making the anti-counterfeiting data embedment completely get rid of the restriction on the capacity of embedded information and the embedding position of the two-dimensional code imposed by the picture content, and greatly enhancing style diversification and practicability of the electronic bill.

### BRIEF DESCRIPTION OF THE DRAWINGS

Fig. 1 illustrates a system for generating or/and a system for verifying an electronic bill with an anti-counterfeiting two-dimensional code according to the present invention.
Fig. 2 is a flow chart of a method for generating an electronic bill with the anti-counterfeiting two-dimensional code according to the present invention.
Fig. 3 illustrates a processing of data in the generation of an electronic bill with the anti-counterfeiting two-dimensional code according to the present invention.
Fig. 4 illustrates the electronic bill with the anti-counterfeiting two-dimensional code generated according to the method for generating an electronic bill with the anti-counterfeiting two-dimensional code according to the present invention.
Fig. 5 is a flow chart of method for verifying an electronic bill with the anti-counterfeiting two-dimensional code according to the present invention.
Fig. 6 illustrates a processing of data method for verifying an electronic bill with the anti-counterfeiting two-dimensional code according to the present invention.

### DETAILED DESCRIPTION

The following are some of multiple embodiments according to the present invention, which intends not to confirm the key or decisive elements of the present invention or limit the invention, but to provide a general description of the present invention.

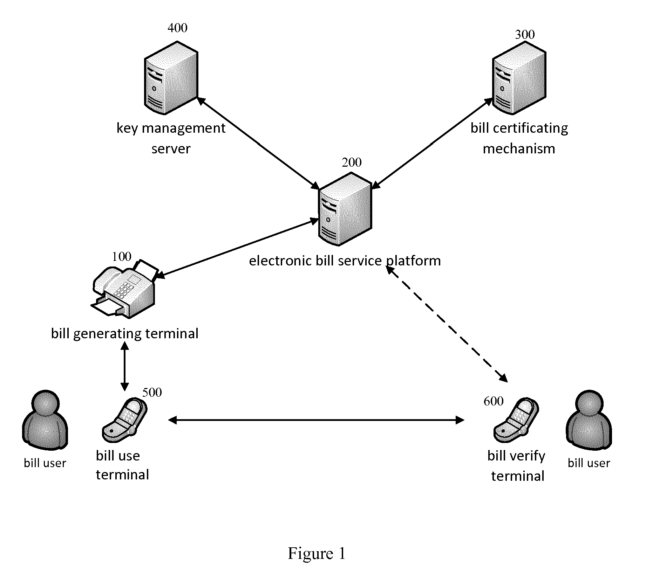

Fig. 1 illustrates a system for generating or/and a system for verifying an electronic bill with an anti-counterfeiting two-dimensional code according to the present invention.

As shown in Fig. 1, the system for generating or/and the system for verifying an electronic bill with an anti-counterfeiting two-dimensional code according to the present invention comprises: a bill generating terminal 100, an electronic bill service platform 200, a bill certificating mechanism 300, and a key management server 400. The bill generating terminal 100 is used to generate an anti-counterfeiting electronic bill, the electronic bill service platform 200 is responsible for the storage and management of the bill, the bill certificating mechanism 300 is responsible for supervising the authenticity of the bill, and the key management server 400 is responsible for the management of the encrypted key.

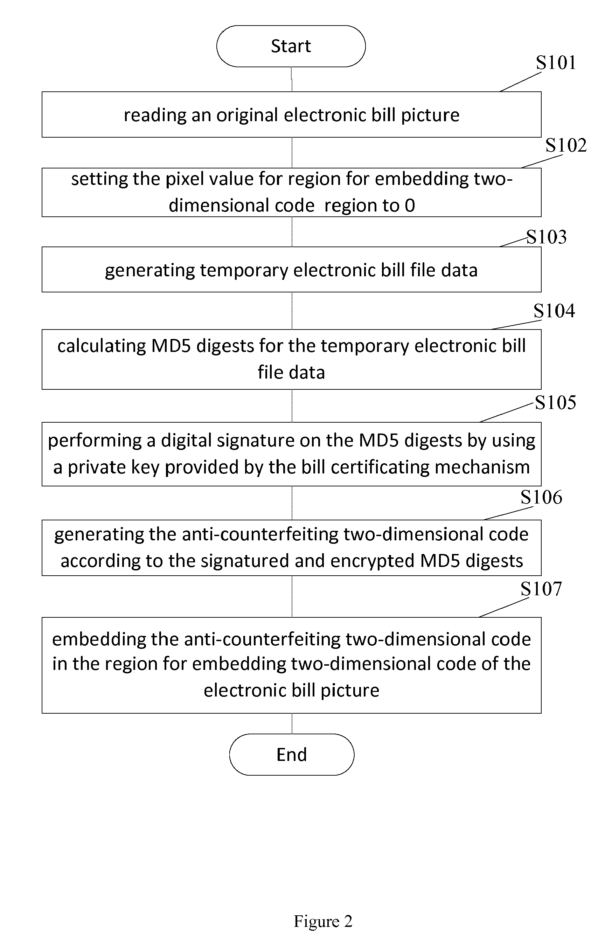

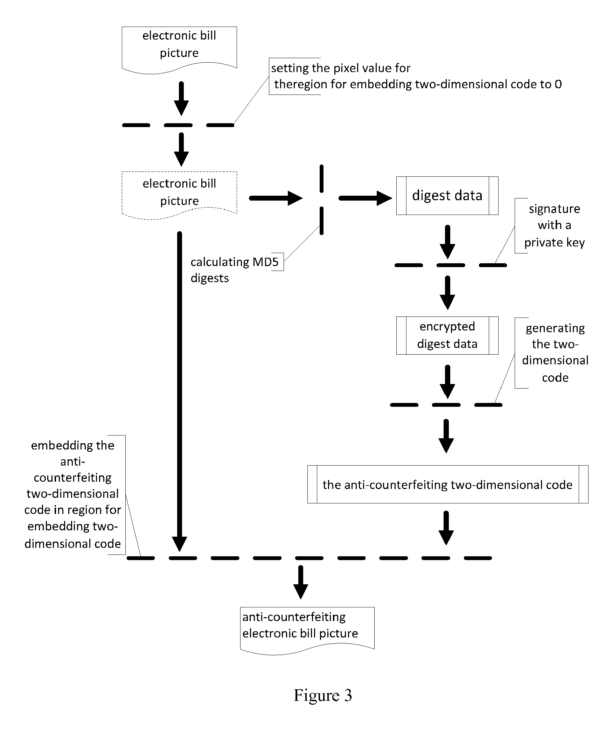

Then, with reference to Figs. 2 and 3, a method for generating an electronic bill with the anti-counterfeiting two-dimensional code according to the present invention is first described.

Fig. 2 is a flow chart of a method for generating an electronic bill with the anti-counterfeiting two-dimensional code according to the present invention. Fig. 3 illustrates a processing of data in the generation of an electronic bill with the anti-counterfeiting two-dimensional code according to the present invention.

As shown in Fig. 2, the method for generating an electronic bill with the anti-counterfeiting two-dimensional code according to the present invention includes the following steps:
Step S101: An original electronic bill picture is read by the bill generating terminal 100.
Step S102: The bill generating terminal 100 positions a region for embedding two-dimensional code by using a specified two-dimensional code positioning technology and sets the pixel value for said region to a specified value.
Step S103: The bill generating terminal 100 generates a temporary electronic bill picture with the positioned region for embedding the two-dimensional code.
Step S104: The electronic bill service platform 200 calculates digest data for the temporary electronic bill picture by using an information digest algorithm.
Step S105: The electronic bill service platform 200 performs a digital signature on the digest data by using a private key obtained from the bill certificating mechanism 300.
Step S107: The anti-counterfeiting two-dimensional code is generated according to the signatured and encrypted digests.
Step S108: The generated anti-counterfeiting two-dimensional code is embedded in the region for embedding the two -dimensional code of the original electronic bill picture to obtain an electronic bill with the anti-counterfeiting two-dimensional code.

In the above step S102, as the two-dimensional code positioning technology for positioning the region for embedding the two-dimensional code, for example, a fast detecting and positioning algorithm of the two-dimensional code region based on edge enhancement may be used to determine the region of the original electronic bill picture for embedding two-dimensional code. The fast detecting and positioning algorithm of the two-dimensional code region based on edge enhancement includes the following steps:
(1) inputting image;
(2) performing an initialization;
(3) performing a Max-Min differential operation;
(4) performing a Candy edge extraction;
(5) performing an initial positioning of the projection;
(6) performing a precise positioning of the morphology; and
(7) outputting results.

In the above step S102, the pixel value for the region for embedding the two-dimensional code is set to a specified value, such as 0 or a known fixed value, so as to prevent the calculation results of picture digests from being affecttd by the he original pixel value for said region. Since the pixel of the original region is covered after the two-dimensional code is embedded and such information is not recoverable, the pixel value for the region for embedding the two-dimensional code is set as a specified value.

In the above step S104, the electronic bill service platform 200 calculates digest data for the temporary electronic bill picture using an information digest algorithm. The information digest algorithm can be for example the MD5 algorithm (MD5: Message Digest Algorithm, which is referred to as the fifth edition of the message digest algorithm in Chinese, and is a kind of hash function widely used in the field of computer security to provide integrity protection of information) and the SHA-1 (SHA : Secure Hash Algorithm) algorithm. The information digest algorithm employed by the method for generating an electronic bill with the anti-counterfeiting two-dimensional code according to the present invention may include the above MD5 algorithm, and SHA-1, but is not limited to the above algorithms, may also use other information digest algorithms.

Fig. 3 illustrates a processing of data in the generation of an electronic bill with the anti-counterfeiting two-dimensional code according to the present invention. Fig. 3 illustrates an embodiment in which the pixel value for the region for embedding the two-dimensional code is set to 0 after said region is positioned, and the digest data is calculated using the MD5 algorithm.

As illustrated in Fig. 3, firstly, after reading the original electronic bill picture, the region for embedding the two-dimensional code is positioned and the pixel value for said region is set to 0. Then, the temporary electronic bill picture is generated. MD5 digest of the temporary electronic bill picture is calculated to obtain digest data. A digital signature is performed on the digest data by the private key provided by the bill certificating mechanism 300 to obtain encrypted digest data. And then the anti-counterfeiting two-dimensional code is generated according to the encrypted digest data. Finally, the generated anti-counterfeiting two-dimensional code is embedded in the positioned region to obtain the anti-counterfeiting electronic bill picture.

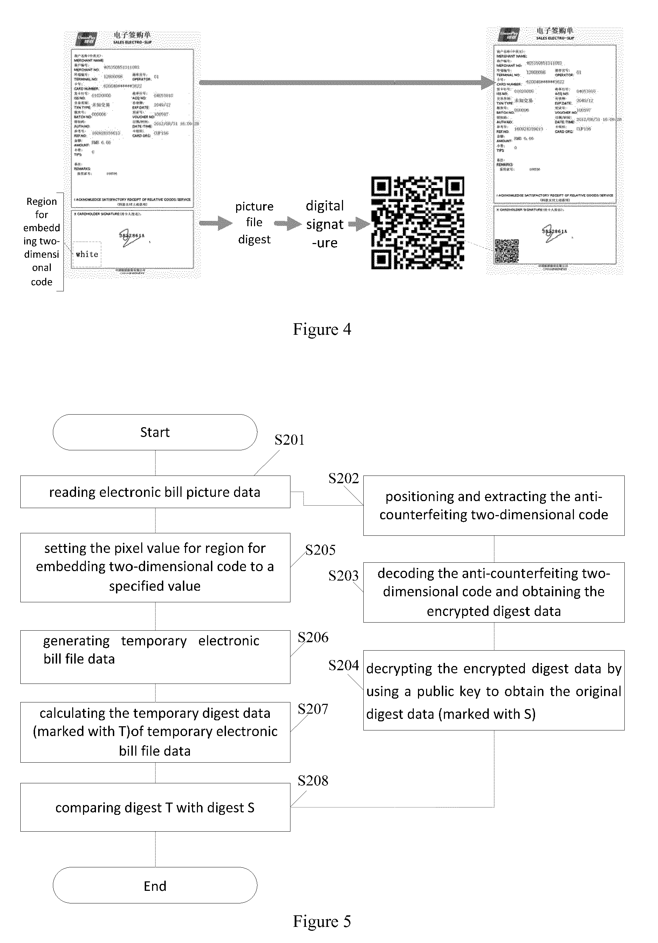

Fig. 4 illustrates the electronic bill with the anti-counterfeiting two-dimensional code generated according to the method shown in figures 2 and 3.

The electronic bill without the two-dimensional code is showed on the left side of Fig. 4, and the electronic bill with the anti-counterfeiting two-dimensional code embedded therein is showed on the right side of Fig. 4.

As mentioned above, in the method for generationg the electronic bill with the anti-counterfeiting two-dimensional code according to the present invention, digest data is calculated for the temporary electronic bill picture. The length of the digest does not change regardless of the information amount of the original picture since the digest information has the fixed length (128 or 160 bits), such that the amount of anti-counterfeiting data can not be limited by the magnitude of information amount of the picture.

Moreover, in the present invention, through setting the pixel value of the region for embedding two-dimensional code to a certain specified value, such as 0, it is capable of preventing the digest information of the picture from being affected by the original pixels for the region for embedding two-dimensional code, such that the embedded information is not limited by the contents of the original picture.

Moreover, in the present invention, by using two-dimensional code positioning technology to determine the two-dimensional code embedding region, since the two-dimensional code positioning technology can automatically position the position of the two-dimensional code in the picture, the embedding position is not limited when the two-dimensional code is embedded. Therefore, the method for generating the electronic bill with the anti-counterfeiting two-dimensional code according to the present invention can cause the embedding of anti-counterfeiting data to completely get rid of the limitation on the embedded information capacity and the embedding position of the two-dimensional code by the content of the picture.

It can be seen that the present invention proposes a new approach of electronic bill anti-counterfeiting in which one to one correspondence between the anti-counterfeiting data and bill data can be achieved using the two-dimensional code as the anti-counterfeiting means of the electronic bill. Accordingly, the bill from being tampered and forged can be really avoided.

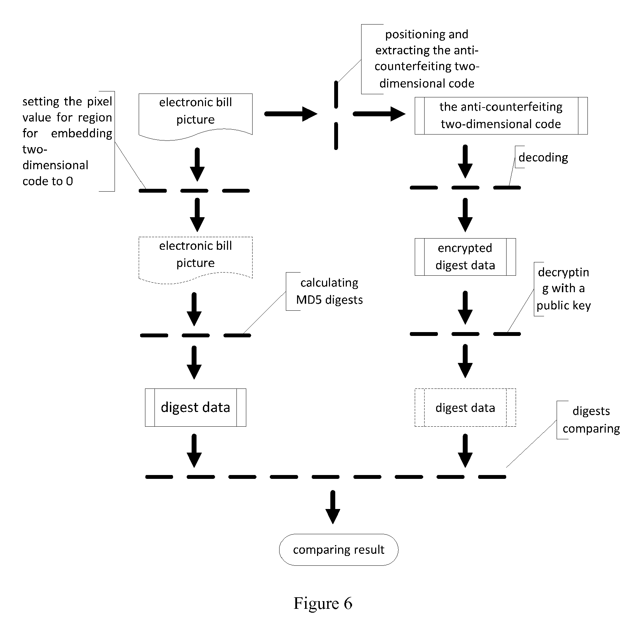

The method for verifying the electronic bill with the anti-counterfeiting two-dimensional code according to the present invention is described with reference to Figs. 5 and 6 as below.

Fig. 5 is a flow chart of method for verifying an electronic bill with the anti-counterfeiting two-dimensional code according to the present invention. Fig. 6 illustrates a processing of data method for verifying an electronic bill with the anti-counterfeiting two-dimensional code according to the present invention.

The method for verifying the electronic bill with the anti-counterfeiting two-dimensional code of the present invention includes the following steps:
Step S201: An electronic bill picture with the anti-counterfeiting two-dimensional code is read by the bill use terminal 500 through the bill generating terminal 100.
Step S202: The anti-counterfeiting two-dimensional code is positioned and extracted for the read electronic bill picture.
Step S203: The two-dimensional code is decoded and the encrypted digest data is obtained.
Step S204: The digest data is decrypted to obtain the original digest data S by using a public key provided by the bill certificating mechanism 300.
Step S205: The two-dimensional code region of the electronic bill data read in Step S201 is positioned, and the pixel value of the two-dimensional code region is set to a specified value.
Step S206: The temporary electronic bill file data is generated for the electronic bill with the two-dimensional code which has been positioned the region for embedding the two-dimensional code at Step S205.
Step S207: Digest data of the temporary electronic bill picture is calculated for the temporary electronic bill file data obtained through Step S206 by using an information digest algorithm to obtain temporary digest data T.
Step S208: The original digest data S obtained at Step S204 and the temporary digest data T obtained at Step S207 are compared with each other, then it is determined as a legal bill in the case where the two data are consistent and it is determined as an illegal bill in the case where the two data are not consistent.

Therein, in the step S202, as the method for positioning the electronic bill picture, a fast detecting and positioning algorithm of the two-dimensional code region based on edge enhancement is used to determine the region for embedding two-dimensional code in the electronic bill picture with the anti-counterfeiting two-dimensional code. The fast detecting and positioning algorithm of the two-dimensional code region based on edge enhancement includes the following steps:
(1) inputting image;
(2) performing an initialization;
(3) performing a Max-Min differential operation;
(4) performing a Candy edge extraction;
(5) performing an initial positioning of the projection;
(6) performing a precise positioning of the morphology; and
(7) outputting results.

In the above step S205, the pixel value for the region for embedding the two-dimensional code is set to a specified value, such as 0 or a known fixed value. As already mentioned above, this is to prevent the calculation results of picture digests from being affected by the original pixel value of the region. Since the pixel of the original region may be covered after the two-dimensional code is embedded and such information is not recoverable, the pixel value for the region for embedding the two-dimensional code is set to a certain specified value.

In the above step S206, the electronic bill service platform 200 calculates digest data for the temporary electronic bill picture using an information digest algorithm. As already mentioned above, the information digest algorithms can be for example the MD5 algorithm and the SHA-1. The information digest algorithm employed by the method for verifying an electronic bill with the anti-counterfeiting two-dimensional code of the present invention includes the above MD5 algorithm, and SHA-1, but is not limited to the above algorithms, may also use other information digest algorithms.

Fig. 6 llustrates a processing of data method for verifying an electronic bill with the anti-counterfeiting two-dimensional code according to the present invention. Fig. 6 illustrates the embodiment in which the pixel value for the region for embedding the two-dimensional code is set to 0 after said region is positioned, and the digest data is calculated using the MD5 algorithm.

As illustrated in Fig. 6, after reading electronic bill data, the region for embedding the two-dimensional code is positioned for the electronic bill data and the anti-counterfeiting two-dimensional code is extracted. The obtained anti-counterfeiting two-dimensional code is decoded to obtain the encrypted digest data. Then, the encrypted digest data is decrypted to obtain the original digest data S by using a public key provided by the bill certificating mechanism 300. On the other hand, for the electronic bill data which has positioned the region for embedding the two-dimensional code, the pixel value for the region for embedding the the two-dimensional code is set to 0, and the temporary electronic bill picture is generated. Next, digest data is calculated for the temporary electronic bill picture by using MD5 to obtain temporary digest data T. Finally, the temporary digest data T and the original digest data S are compared with each other, it is determined as a legal bill in the case where the two data are consistent and it is determined as an illegal bill in the case where the two data are not consistent. This is because the temporary digest data T is the result derived from calculating the digest after removing the two-dimensional code (setting the two-dimensional code region to 0) from the bill picture to be verified, and the original digest data S is the result derived from calculating the digest after setting the two-dimensional code region to 0 in the original bill picture. If the picture to be verified is true, then it is the same as the original picture, and both the results derived from calculating the digests after setting the pixel value to 0 in the same region should be the same. That is, the same regions of two copies of the same picture each are set to white and then the calculation results from calculating the MD5 digests should be same.

In addition, the electronic bill anti-counterfeiting verification scheme proposed by the present invention can be implemented both online and offline, having a strong practicability. Online verification means there has a need to interact with key managers (such as the electronic bill system) to obtain the decryption key during the verifying process, and the offline verification means that the decryption key already exists in the local (such as a mobile phone) without the need to interact with key managers.

The following is a brief description of the system for generating the electronic bill with the anti-counterfeiting two-dimensional code according to the present invention. As illustrated in Fig. 1, the system for generating the electronic bill with the anti-counterfeiting two-dimensional code according to the present invention comprises: a bill generating terminal 100, an electronic bill service platform 200 and a bill certificating mechanism 300. The bill certificating mechanism 300 is used for providing a private key and a public key. The bill generating terminal 100 is used for reading an original electronic bill picture and generating a temporary electronic bill picture with a determined region for embedding the two-dimensional code. The electronic bill service platform 200 is used for calculating digest data for the temporary electronic bill picture by using an information digest algorithm and for encrypting the obtained digest data by using the private key provided by the bill certificating mechanism to generate the anti-counterfeiting two-dimensional code. And the bill generating terminal 100 is used for embedding the anti-counterfeiting two-dimensional code into the region for embedding two-dimensional code in the original electronic bill picture to obtain an electronic bill with the anti-counterfeiting two-dimensional code.

As illustrated in Fig. 1, the system for verifying the electronic bill with the anti-counterfeiting two-dimensional code according to the present invention comprises: a bill generating terminal 100, an electronic bill service platform 200 and a bill certificating mechanism 300. The bill certificating mechanism 300 is used for providing a private key and a public key. The bill generating terminal 100 is used for reading an electronic bill picture with the anti-counterfeiting two-dimensional code, positioning and extracting the anti-counterfeiting two-dimensional code, and generating a temporary electronic bill picture with a positioned region for embedding two-dimensional code; the electronic bill service platform 200 is used for calculating digest data of the temporary electronic bill picture by using an information digest algorithm to obtain temporary digest data; for decoding and decrypting the extracted anti-counterfeiting two-dimensional code to obtain the original digest data; and for comparing the temporary digest data with the original digest data, and then determining, from the comparison, the electrical bill as a legal bill in the case where the two data are consistent and as an illegal bill in the case where the two data are not consistent.

As illustrated in Fig. 1, the system for generating and verifying the electronic bill with the anti-counterfeiting two-dimensional code according to the present invention comprises: a bill generating terminal 100, an electronic bill service platform 200 and a bill certificating mechanism 300. The bill certificating mechanism 300 is used for providing a private key and a public key. In case of generating the electronic bill with the anti-counterfeiting two-dimensional code: the bill generating terminal 100 is used for reading an original electronic bill picture and generating a temporary electronic bill picture with a positioned region for embedding the two-dimensional code, the electronic bill service platform 200 is used for calculating digest data for the temporary electronic bill picture by using an information digest algorithm and encrypting the obtained digest data by using the private key provided by the bill certificating mechanism to generate the anti-counterfeiting two-dimensional code, and the bill generating terminal 100 is used for embedding the anti-counterfeiting two-dimensional code into the region for embedding the two-dimensional code of the original electronic bill picture to obtain the electronic bill with the anti-counterfeiting two-dimensional code. In case of verifying the electronic bill with the anti-counterfeiting two-dimensional code: the bill generating terminal 100 is used for reading an electronic bill picture with the anti-counterfeiting two-dimensional code, positioning and extracting the anti-counterfeiting two-dimensional code, and generating a temporary electronic bill picture with a positioned region for embedding two-dimensional code, the electronic bill service platform 200 is used for calculating digest data of the temporary electronic bill picture by using an information digest algorithm to obtain temporary digest data; for decoding and decrypting the extracted anti-counterfeiting two-dimensional code to obtain the original digest data; and for comparing the temporary digest data with the original digest data, and then determining the electronic bill as a legal bill in the case where the two data are consistent and as an illegal bill in the case where the two data are not consistent.

The above examples mainly illustrate methods for generating and verifying an electronic bill with an anti-counterfeiting two-dimensional code and systems for the same according to the present invention. Although it is only description of some of specific implementations of the present invention, but those skilled in the art should understand that the present invention may be implemented in many other forms without departing from its spirit and scope. Therefore, the examples and implementations shown are considered to be exemplary and non-restrictive, and various modifications and replacements shall be covered by the present invention without departing from the spirit and scope of the present invention as defined by the attached claims.

## Claims

1. A method for generating an electronic bill with an anti-counterfeiting two-dimensional code, comprising :
temporarily generating the electronic bill wherein an original electronic bill picture is read and a temporary electronic bill picture with a determined region for embedding the two-dimensional code is generated;
generating an anti-counterfeiting two-dimensional code wherein digest data for the temporary electronic bill picture is calculated by using an information digest algorithm and the obtained digest data is encrypted to generate an anti-counterfeiting two-dimensional code; and
embedding an anti-counterfeiting two-dimensional code wherein the anti-counterfeiting two-dimensional code is embedded into the region for embedding two-dimensional code of the original electronic bill picture to obtain an electronic bill with the anti-counterfeiting two-dimensional code.

2. The method of claim 1, wherein the temporarily generating the electronic bill includes:
reading the original electronic bill picture;
determining the region for embedding the two-dimensional code in the original electronic bill picture; and
setting the pixel value for the region for embedding the two-dimensional code to a specified value and generating the temporary electronic bill picture.

3. The method of claim 2, wherein a fast detecting and positioning algorithm of the two-dimensional code region based on edge enhancement is used to determine the region for embedding the two-dimensional code in the original electronic bill picture.

4. The method of claim 3, wherein the generating anti-counterfeiting two-dimensional code includes:
calculating digest data of the temporary electronic bill picture by using an information digest algorithm;
performing a data signature on the generated digest data by using a private key, and thereby generating encrypted digest data; and
generating the anti-counterfeiting two-dimensional code from the encrypted digest data.

5. The method of any one of claims 1 to 4, wherein the specified value is 0.

6. A method for verifying an electronic bill with an anti-counterfeiting two-dimensional code, comprising:
temporarily generating the electronic bill wherein an electronic bill picture with the anti-counterfeiting two-dimensional code is read, the anti-counterfeiting two-dimensional code is positioned and extracted, and a temporary electronic bill picture with a positioned region for embedding two-dimensional code is generated;
obtaining temporary digest data wherein digest data of the temporary electronic bill picture is calculated by using an information digest algorithm to obtain the temporary digest data;
obtaining original digest data wherein the extracted anti-counterfeiting two-dimensional code is decoded and decrypted to obtain the original digest data; and
comparing the digest data wherein the temporary digest data and the original digest data are compared with each other, then it is determined as a legal bill in the case where the two data are consistent and it is determined as an illegal bill in the case where the two data are not consistent.

7. The method of claim 7, wherein, the temporarily generating the electronic bill includes:
reading the electronic bill with the anti-counterfeiting two-dimensional code;
positioning and extracting the anti-counterfeiting two-dimensional code;
determining the region for embedding two-dimensional code from the result of the positioning; and
setting the pixel value for the region for embedding the two-dimensional code to a specified value and generating a temporary electronic bill file.

8. The method of claim 8, wherein a fast detecting and positioning algorithm of the two-dimensional code region based on edge enhancement is used to determine the region for embedding the two-dimensional code in the electronic bill picture with the anti-counterfeiting two-dimensional code.

9. The method of claim 9, wherein the obtaining original digest data includes:
decoding the anti-counterfeiting two-dimensional code to obtain encrypted digest data; and
decrypting the encrypted digest data by using a public key to obtain original digest data.

10. The method of any one of claims 7 to 11, wherein the specified value is 0.

11. A system for generating an electronic bill with an anti-counterfeiting two-dimensional code, said system comprising a bill generating terminal, an electronic bill service platform and a bill certificating mechanism,
wherein the bill certificating mechanism is used for providing a private key and a public key,
wherein the bill generating terminal is used for reading an original electronic bill picture and generating a temporary electronic bill picture with a determined region for embedding two-dimensional code,
wherein the electronic bill service platform is used for calculating digest data for the temporary electronic bill picture by using an information digest algorithm and encrypting the obtained digest data by using the private key provided by the bill certificating mechanism to generate the anti-counterfeiting two-dimensional code; and
wherein the bill generating terminal is used for embedding the anti-counterfeiting two-dimensional code into the region for embedding two-dimensional code of the original electronic bill picture to obtain an electronic bill with the anti-counterfeiting two-dimensional code.

12. The system of claim 13, wherein the bill generating terminal is used for setting the pixel value for the region for embedding the two-dimensional code to a specified value in order to generate the temporary electronic bill picture with the determined region for embedding the two-dimensional code.

13. A system for verifying an electronic bill with an anti-counterfeiting two-dimensional code, said system comprising a bill generating terminal, an electronic bill service platform and a bill certificating mechanism,
wherein the bill certificating mechanism is used for providing a private key and a public key,
wherein the bill generating terminal is used for reading an electronic bill picture with the anti-counterfeiting two-dimensional code, positioning and extracting the anti-counterfeiting two-dimensional code, and generating a temporary electronic bill picture with a positioned region for embedding the two-dimensional code;
wherein the electronic bill service platform is used for calculating digest data of the temporary electronic bill picture by using an information digest algorithm to obtain temporary digest data; for decoding and decrypting the extracted anti-counterfeiting two-dimensional code to obtain the original digest data; and for comparing the temporary digest data with the original digest data, and then determining from the comparison that it is a legal bill in the case where the two data are consistent and it is an illegal bill in the case where the two data are not consistent.

14. A system for generating and verifying an electronic bill with an anti-counterfeiting two-dimensional code, said system comprising a bill generating terminal, an electronic bill service platform and a bill certificating mechanism,
wherein the bill certificating mechanism is used for providing a private key and a public key,
wherein in case of generating the electronic bill with the anti-counterfeiting two-dimensional code:
the bill generating terminal is used for reading an original electronic bill picture, and generating a temporary electronic bill picture with a determined region for embedding two-dimensional code; the electronic bill service platform is used for calculating digest data for the temporary electronic bill picture by using an information digest algorithm and encrypting the obtained digest data by using the private key provided by the bill certificating mechanism to generate the anti-counterfeiting two-dimensional code, and the bill generating terminal is used for embedding the anti-counterfeiting two-dimensional code in the region for embedding two-dimensional code of the original electronic bill picture to obtain the electronic bill with the anti-counterfeiting two-dimensional code; and
wherein in case of verifying the electronic bill with the anti-counterfeiting two-dimensional code:
the bill generating terminal is used for reading an electronic bill picture with the anti-counterfeiting two-dimensional code, positioning and extracting the anti-counterfeiting two-dimensional code, and generating a temporary electronic bill picture with a determind region for embedding two-dimensional code, the electronic bill service platform is used for calculating digest data of the temporary electronic bill picture by using an information digest algorithm to obtain temporary digest data; for decoding and decrypting the extracted anti-counterfeiting two-dimensional code to obtain the original digest data; and for comparing the temporary digest data with the original digest data, and then determining from the comparison it is a legal bill in the case where the two data are consistent and it is an illegal bill in the case where the two data are not consistent.
